# EUROPÄISCHE PATENTSCHRIFT

(11) **EP 2 800 984 B1**
(45) Veröffentlichungstag und Bekanntmachung des Hinweises auf die Patenterteilung: **31.10.2018**
(21) Anmeldenummer: 13700486.7
(22) Anmeldetag: 07.01.2013
(51) Int. Cl.: G01S 17/87, G01S 17/89, G01S 7/481

(54) **KAMERAANORDNUNG ZUR DISTANZMESSUNG**
CAMERA ARRANGEMENT FOR MEASURING DISTANCE
SYSTÈME DE CAMÉRA DESTINÉ À LA TÉLÉMÉTRIE

(30) Priorität: 07.01.2012 DE 102012000176; 11.05.2012 DE 102012207931
(43) Veröffentlichungstag der Anmeldung: 12.11.2014
(73) Patentinhaber: Johnson Controls GmbH, 51399 Burscheid (DE)
(72) Erfinder: EPPINGER, Andreas, 51467 Bergisch Gladbach (DE); SCHLIEP, Frank, 51375 Leverkusen (DE); KIRSCH, Oliver, 42111 Wuppertal (DE); BOEHM, Hannes, Rene, 50825 Köln (DE)
(74) Vertreter: Finger, Catrin
(86) Internationale Anmeldenummer: PCT/EP2013/050129
(87) Internationale Veröffentlichungsnummer: WO 2013/102677

(56) Entgegenhaltungen:
- US-A1- 2008 048 887
- US-A1- 2010 165 323
- US-A1- 2010 283 842

## Beschreibung

Die Erfindung betrifft eine Kameraanordnung und eine Verwendung einer solchen Kameraanordnung.

Es sind so genannte TOF-Kameras (Time of flight camera) bekannt, die eine Szene aktiv beleuchten, beispielsweise mittels Infrarotlicht und mittels eines Sensors die Laufzeit des zur Beleuchtung verwendeten Lichtes ermitteln. Auf dieser Grundlage wird dann eine Entfernung des beleuchteten Objekts von der Kamera bestimmt. Viele dieser TOF-Kameras können Hintergrundlicht unterdrücken, das nicht aus der Kamera-Lichtquelle stammt.

Aus der DE 10 2009 001 159 A1 ist eine Kamera zur Erfassung von elektromagnetischer Strahlung in einem ersten Frequenzbereich bekannt, die einen elektrooptischen Kristall, einen Analysator und ein Detektorarray mit einer Mehrzahl von Detektoren zur Erfassung elektromagnetischer Strahlung in einem zweiten Frequenzbereich aufweist. Der Analysator ist in Strahlrichtung der elektromagnetischen Strahlung in dem zweiten Frequenzbereich zwischen dem elektrooptischen Kristall und dem Detektorarray angeordnet. Eine Mehrzahl der Detektoren des Detektorarrays weist jeweils eine Einrichtung zur Demodulation der elektromagnetischen Strahlung in dem zweiten Frequenzbereich auf.

US 2008/048887 A1 offenbart ein System zum Erfassen fotografierter Bilder einer Mehrzahl von Objekten. In dem Objekterfassungssystem wird reflektiertes Licht von einer Vielzahl von Objekten, das heißt einem Objekt A und einem Objekt B, durch ein optisches System einem Abstandsmessabbildungschips zugeführt, wobei erzeugte Bilder des Objektes A und des Objektes B ganz oder teilweise übereinander auf einer festgelegten Bildfläche der Abstandsmessabbildungschips überlagert werden. Darüber hinaus ist das Objekterfassungssystem geeignet, zwischen einem Zustand, in dem nur das Objekt A auf den Abbildungsbereich projiziert wird, und einem Zustand, in dem nur das Objekt B durch einen Schattierungsfilter auf den Abbildungsbereich projiziert wird, auszuwählen.

Aufgabe der vorliegenden Erfindung ist es, eine gegenüber dem Stand der Technik verbesserte Kameraanordnung und eine Verwendung einer solchen Kameraanordnung anzugeben.

Hinsichtlich der Kameraanordnung wird die Aufgabe erfindungsgemäß durch die in den Ansprüchen 1 und 2 angegebenen Merkmale und hinsichtlich der Verwendung durch die im Anspruch 6 angegebenen Merkmale gelöst.

Erfindungsgemäß umfasst die Kameraanordnung zumindest eine Beleuchtungseinrichtung zur Beleuchtung mehrerer Sichtfelder, wobei in den Sichtfeldern jeweils zumindest ein zu erfassendes Objekt liegt. Weiterhin umfasst die Kameraanordnung erfindungsgemäß zumindest eine Objektivlinse zur Bündelung eines Strahlenganges, welcher zumindest eines der mehreren Sichtfelder umfasst. Alternativ umfasst die Kameraanordnung erfindungsgemäß zumindest eine Objektivlinse zur Bündelung mehrerer Strahlengänge, welche jeweils zumindest eines der mehreren Sichtfelder umfassen. Ferner umfasst die Kameraanordnung erfindungsgemäß einen TOF-Sensor, wobei die zumindest eine Beleuchtungseinrichtung, die zumindest eine Objektivlinse und der TOF-Sensor derart zueinander und zu den Sichtfeldern und den darin liegenden Objekten angeordnet sind, dass Abbildungen der Objekte gleichzeitig oder zeitlich nacheinander auf dem einen TOF-Sensor abbildbar sind.

Somit ist die Kameraanordnung derart ausgebildet, dass sie zwei oder mehr Sichtfelder (FOV - field of view) mit einem einzigen TOF-Sensor-Chip aufnehmen kann. Dies kann durch räumliche Überlagerung oder durch Zeit-Multiplexverfahren erfolgen.

Vorteilhaft ist dabei, dass nur ein einziger TOF-Sensor-Chip zur Erfassung mehrerer Szenen benötigt wird. Auf diese Weise kann die Kameraanordnung, verglichen mit je einem TOF-Sensor-Chip pro Szene, kostengünstiger gestaltet werden.

In einer Weiterbildung der Erfindung sind zwei Beleuchtungseinrichtungen vorgesehen, wobei mittels jeder Beleuchtungseinrichtung jeweils ein Sichtfeld beleuchtbar ist, wobei zwischen den Objekten und dem TOF-Sensor jeweils eine Objektivlinse angeordnet ist und Abbildungen der Objekte in einem zumindest teilweisen gemeinsamen Bereich auf dem TOF-Sensor abbildbar sind. Dabei sind die zwei Beleuchtungseinrichtungen insbesondere mit einer Steuereinrichtung gekoppelt, wobei die Beleuchtungseinrichtungen mittels der Steuereinrichtung unabhängig voneinander zu verschiedenen Zeitpunkten aktivierbar sind.

Hierbei werden zwei Sichtfelder zweier Szenen gleichzeitig auf einem Sensor abgebildet. Auf dem Sensor-Chip entsteht dabei eine Überlagerung beider Abbildungen. Um beide Sichtfelder abzubilden kann ein Strahlteiler verwendet werden. Es sind jedoch auch andere Anordnungen möglich, um die überlagerte Abbildung zweier Sichtfelder auf dem Sensor-Chip zu erreichen.

Die TOF-Kameraanordnung beleuchtet die Szene aktiv und unterdrückt Hintergrundlicht. Durch Umschalten der Beleuchtung auf jeweils nur eine der Szenen wird die nicht beleuchtete Szene ausgeblendet und nur das Sichtfeld der gerade beleuchteten Szene erfasst.

Gemäß einer Ausgestaltung der Erfindung ist eine Beleuchtungseinrichtung vorgesehen, wobei mittels der Beleuchtungseinrichtung die Sichtfelder beleuchtbar sind, wobei zwischen den Objekten und dem TOF-Sensor eine gemeinsame Objektivlinse angeordnet ist und Abbildungen der in den Sichtfeldern liegenden Objekte separat in unterschiedlichen Bereichen auf dem TOF-Sensor abbildbar sind.

Das heißt, es werden die beiden Sichtfelder auf verschiedene Bereiche des Sensor-Chips abgebildet. Auf diese Weise können beide Sichtfelder simultan erfasst werden.

In einer weiteren Ausgestaltung sind zwei Beleuchtungseinrichtungen vorgesehen, wobei mittels jeder Beleuchtungseinrichtung jeweils ein Sichtfeld beleuchtbar ist, wobei zwischen den Objekten und dem TOF-Sensor eine gemeinsame Objektivlinse und zwischen den Objekten und der Objektivlinse ein steuerbarer Spiegel angeordnet ist, wobei der Spiegel derart steuerbar ist, dass der Objektivlinse mittels diesem entweder ein Strahlengang eines ersten Sichtfeldes oder ein Strahlengang eines zweiten Sichtfeldes zuführbar ist und Abbildungen der Objekte in einem gemeinsamen Bereich auf dem TOF-Sensor abbildbar sind.

Hierbei sind die zwei Beleuchtungseinrichtungen wiederum vorzugsweise mit einer Steuereinrichtung gekoppelt, wobei die Beleuchtungseinrichtungen mittels der Steuereinrichtung unabhängig voneinander zu verschiedenen Zeitpunkten aktivierbar sind. Insbesondere ist eine erste Beleuchtungseinrichtung zu einem ersten Zeitpunkt aktivierbar, wenn mittels des Spiegels der Strahlengang des ersten Sichtfeldes auf dem TOF-Sensor abgebildet ist. Eine zweite Beleuchtungseinrichtung ist insbesondere zu einem zweiten Zeitpunkt dann aktivierbar, wenn mittels des Spiegels der Strahlengang des zweiten Sichtfeldes auf dem TOF-Sensor abgebildet ist.

Somit werden die Sichtfelder erfasst, indem die Kameraanordnung sequentiell auf verschiedene Szenen ausgerichtet wird. Jede der Szenen muss nur dann beleuchtet werden, wenn das Kamerasichtfeld gerade darauf ausgerichtet ist.

Bei dem Spiegel handelt es sich gemäß einer Weiterbildung der Erfindung um einen digitalen Spiegel, insbesondere einen Mikrospiegel (so genannte MEMS - micro electro mechanical systems).

Die Kameraanordnung kann beispielsweise zur Distanzmessung verwendet werden, wobei aus einer Laufzeit eines mittels der zumindest einen Beleuchtungseinrichtung zu den Sichtfeldern ausgesandten Lichts eine Distanz zwischen der Kameraanordnung zu dem zumindest einen in dem jeweiligen Sichtfeld liegenden Objekt ermittelt wird.

In einer Weiterbildung wird die Kameraanordnung in einem Fahrzeug verwendet, um die Köpfe eines Fahrers und eines Beifahrers mit nur einem TOF-Sensor zu überwachen. Weiterhin können innerhalb des Fahrzeugs Gesten, Mimiken, Augenpositionen, Blickrichtungen, Sitzpositionen, Kopfpositionen und/oder anthropometrische Merkmale des Fahrers und/oder Beifahrers überwacht werden. Bei den Gesten handelt es sich insbesondere um Handgesten.

Anhand der beigefügten schematischen Figuren wird die Erfindung näher erläutert.
Figur 1 ist eine schematische Ansicht einer ersten Ausführungsform einer Kameraanordnung,
Figur 2 ist eine schematische Ansicht einer zweiten Ausführungsform einer Kameraanordnung, und
Figur 3 ist eine schematische Ansicht einer dritten Ausführungsform einer Kameraanordnung.

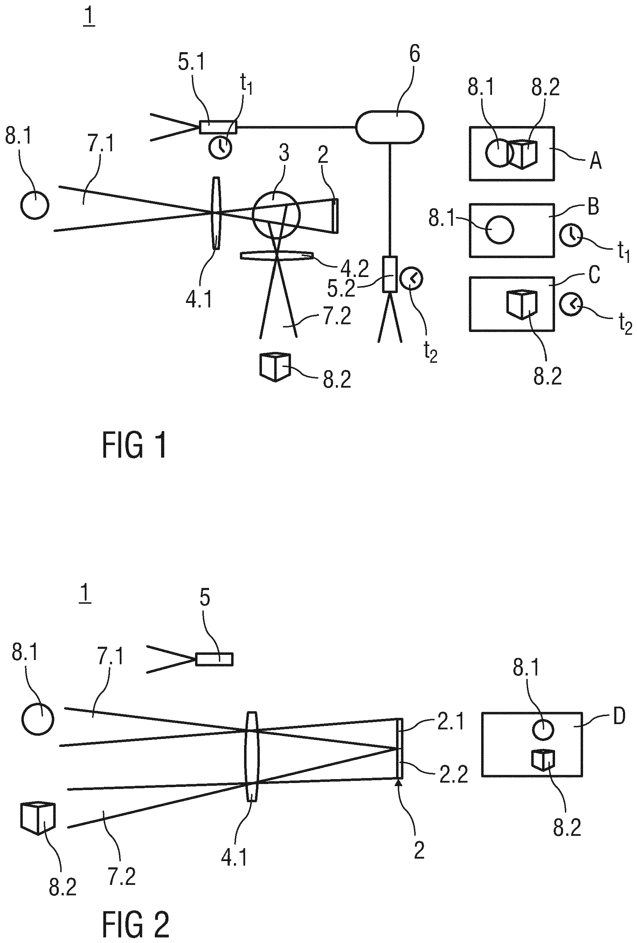

Figur 1 zeigt eine schematische Ansicht einer ersten Ausführungsform einer Kameraanordnung 1, umfassend einen TOF-Sensor 2, einen Strahlteiler 3, zwei Objektivlinsen 4.1 und 4.2, zwei Beleuchtungseinrichtungen 5.1, 5.2 und eine Steuereinrichtung 6.

Die Objektivlinse 4.1 bündelt einen Strahlengang eines ersten Sichtfeldes 7.1, in dem ein zu erfassendes erstes Objekt 8.1 liegt.
Die Objektivlinse 4.2 bündelt einen Strahlengang eines zweiten Sichtfeldes 7.2, in dem ein zu erfassendes zweites Objekt 8.2 liegt.

Die gebündelten Strahlengänge aus beiden Objektivlinsen 4.1, 4.2 werden dem Strahlteiler 3 aus unterschiedlichen Richtungen zugeführt, dort einander überlagert und auf den TOF-Sensor 2 abgebildet.

Die Beleuchtungseinrichtung 5.1 ist zur Beleuchtung des ersten Sichtfeldes 7.1 angeordnet.

Die Beleuchtungseinrichtung 5.2 ist zur Beleuchtung des zweiten Sichtfeldes 7.2 angeordnet.

Die Steuereinrichtung 6 steuert die Beleuchtungseinrichtungen 5.1, 5.2, vorzugsweise so, dass jeweils nur eines der Sichtfelder 7.1, 7.2 zu einem Zeitpunkt t₁, t₂ beleuchtet wird.

Die Kameraanordnung 1 ist so ausgebildet, dass Hintergrundlicht zumindest überwiegend unterdrückt und nur aus den Beleuchtungseinrichtungen 5.1, 5.2 stammendes und vom Objekt 8.1, 8.2 reflektiertes Licht erfasst wird.

Bei Beleuchtung beider Sichtfelder 7.1, 7.2 würde der TOF-Sensor 2 beide Objekte 8.1, 8.2 einander überlagert erfassen, so dass sich eine Abbildung A ergeben würde.

Bei Beleuchtung nur des Sichtfeldes 7.1 zu einem Zeitpunkt t₁ ergibt sich auf dem TOF-Sensor 2 eine Abbildung B, auf dem nur das Objekt 8.1 sichtbar ist, so dass dessen Entfernung mittels Laufzeitbestimmung des Lichtes ermittelbar ist.

Bei Beleuchtung nur des Sichtfeldes 7.2 zu einem Zeitpunkt t₂ ergibt sich auf dem TOF-Sensor 2 eine Abbildung C, auf dem nur das Objekt 8.2 sichtbar ist, so dass dessen Entfernung mittels Laufzeitbestimmung des Lichtes ermittelbar ist.

Figur 2 zeigt eine schematische Ansicht einer zweiten Ausführungsform einer Kameraanordnung 1, umfassend einen TOF-Sensor 2, eine Objektivlinse 4 und eine Beleuchtungseinrichtung 5.

Die Objektivlinse 4 bündelt einen Strahlengang, der zwei Sichtfelder 7.1, 7.2 umfasst, wobei im Sichtfeld 7.1 ein zu erfassendes erstes Objekt 8.1 liegt und wobei im Sichtfeld 7.2 ein zu erfassendes zweites Objekt 8.2 liegt.

Der gebündelte Strahlengang wird auf den TOF-Sensor 2 abgebildet, jedoch so, dass das Sichtfeld 7.1 auf einem ersten Bereich 2.1 des TOF-Sensors 2 und das Sichtfeld 7.2 auf einem zweiten Bereich 2.2 des TOF-Sensors 2 abgebildet wird.

Die Beleuchtungseinrichtung 5 ist zur Beleuchtung beider Sichtfelder 7.1, 7.2 angeordnet.

Die Kameraanordnung 1 ist so ausgebildet, dass Hintergrundlicht zumindest überwiegend unterdrückt und nur aus der Beleuchtungseinrichtung 5 stammendes und vom Objekt 8.1, 8.2 reflektiertes Licht erfasst wird.

Auf dem TOF-Sensor 2 ergibt sich eine Abbildung D, auf dem beide Objekte 8.1, 8.2 in getrennten Bereichen sichtbar sind, so dass deren jeweilige Entfernung mittels Laufzeitbestimmung des Lichtes ermittelbar ist.

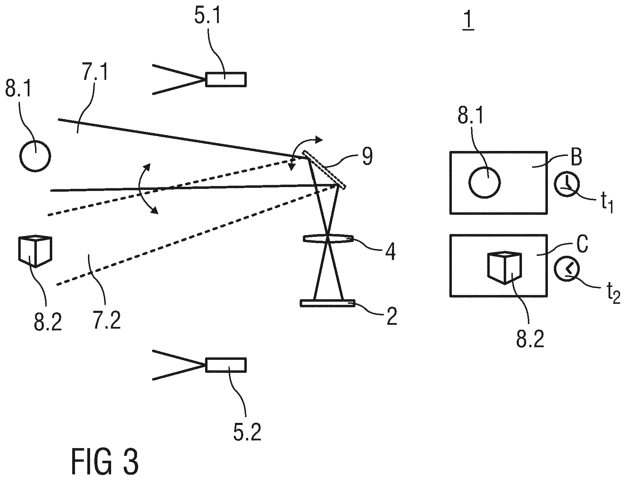

Figur 3 zeigt eine schematische Ansicht einer dritten Ausführungsform einer Kameraanordnung 1, umfassend einen TOF-Sensor 2, eine Objektivlinse 4, zwei Beleuchtungseinrichtungen 5.1, 5.2, eine Steuereinrichtung (nicht dargestellt) und einen steuerbaren Spiegel 9.

Der Spiegel 9 kann durch die Steuereinrichtung so gesteuert werden, dass er entweder einen Strahlengang eines ersten Sichtfeldes 7.1, in dem ein zu erfassendes erstes Objekt 8.1 liegt oder einen Strahlengang eines zweiten Sichtfeldes 7.2, in dem ein zu erfassendes zweites Objekt 8.2 liegt, der Objektivlinse 4 zuführt. Diese bündelt den Strahlengang und bildet sie auf den TOF-Sensor 2 ab.

Die Beleuchtungseinrichtung 5.1 ist zur Beleuchtung des ersten Sichtfeldes 7.1 angeordnet.

Die Beleuchtungseinrichtung 5.2 ist zur Beleuchtung des zweiten Sichtfeldes 7.2 angeordnet.

Die Kameraanordnung 1 ist so ausgebildet, dass Hintergrundlicht zumindest überwiegend unterdrückt und nur aus den Beleuchtungseinrichtungen 5.1, 5.2 stammendes und vom Objekt 8.1, 8.2 reflektiertes Licht erfasst wird.

Bei Ausrichtung des Spiegels 9 auf das Sichtfeld 7.1 zu einem Zeitpunkt t₁ ergibt sich auf dem TOF-Sensor 2 eine Abbildung B, auf dem nur das Objekt 8.1 sichtbar ist, so dass dessen Entfernung mittels Laufzeitbestimmung des Lichtes ermittelbar ist.

Bei Ausrichtung des Spiegels 9 auf das Sichtfeld 7.2 zu einem Zeitpunkt t₂ ergibt sich auf dem TOF-Sensor 2 eine Abbildung C, auf dem nur das Objekt 8.2 sichtbar ist, so dass dessen Entfernung mittels Laufzeitbestimmung des Lichtes ermittelbar ist.

Die Steuereinrichtung 6 kann die Beleuchtungseinrichtungen 5.1, 5.2, vorzugsweise so steuern, dass jeweils nur eines der Sichtfelder 7.1, 7.2 zu einem Zeitpunkt beleuchtet wird.

### Bezugszeichenliste

- 1: Kameraanordnung
- 2: TOF-Sensor
- 2.1, 2.2: Bereich
- 3: Strahlteiler
- 4,4.1, 4.2: Objektivlinse
- 5, 5.1, 5.2: Beleuchtungseinrichtung
- 6: Steuereinrichtung
- 7.1, 7.2: Sichtfeld
- 8.1, 8.2: zu erfassendes Objekt
- 9: Spiegel
- A, B, C, D: Abbildung
- t₁, t₂: Zeitpunkt

## Patentansprüche

1. Kameraanordnung (1),
- umfassend zumindest eine Beleuchtungseinrichtung (5, 5.1, 5.2) zur Beleuchtung mehrerer Sichtfelder (7.1, 7.2), wobei in den Sichtfeldern (7.1, 7.2) jeweils zumindest ein zu erfassendes Objekt (8.1, 8.2) liegt,
- umfassend zumindest eine Objektivlinse (4, 4.1, 4.2) zur Bündelung eines Strahlenganges, welcher zumindest eines der mehreren Sichtfelder (7.1, 7.2) umfasst, und
- umfassend einen TOF-Sensor (2),
- wobei die zumindest eine Beleuchtungseinrichtung (5, 5.1, 5.2), die zumindest eine Objektivlinse (4, 4.1, 4.2) und der TOF-Sensor (2) derart zueinander und zu den Sichtfeldern (7.1, 7.2) und den darin liegenden Objekten (8.1, 8.2) angeordnet sind, dass Abbildungen (A, B, C, D) der Objekte (8.1, 8.2) gleichzeitig auf dem einen TOF-Sensor (2) abbildbar sind, **dadurch gekennzeichnet, dass** eine Beleuchtungseinrichtung (5) vorgesehen ist, wobei mittels der Beleuchtungseinrichtung (5) die Sichtfelder (7.1, 7.2) beleuchtbar sind, wobei zwischen den Objekten (8.1, 8.2) und dem TOF-Sensor (2) eine gemeinsame Objektivlinse (4.1) angeordnet ist, wobei die Objektivlinse (4.1) einen Strahlengang bündelt, der mindestens zwei Sichtfelder (7.1,7.2) umfasst, und wobei Abbildungen (D) der in den Sichtfeldern (7.1, 7.2) liegenden Objekte (8.1, 8.2) separat in unterschiedlichen Bereichen (2.1, 2.2) auf dem TOF-Sensor (2) abbildbar sind.

2. Kameraanordnung (1),
- umfassend zumindest eine Beleuchtungseinrichtung (5, 5.1, 5.2) zur Beleuchtung mehrerer Sichtfelder (7.1, 7.2), wobei in den Sichtfeldern (7.1, 7.2) jeweils zumindest ein zu erfassendes Objekt (8.1, 8.2) liegt,
- umfassend zumindest eine Objektivlinse (4, 4.1, 4.2) zur Bündelung mehrerer Strahlengänge, welche jeweils zumindest eines der mehreren Sichtfelder (7.1, 7.2) umfassen und
- umfassend einen TOF-Sensor (2),
- wobei die zumindest eine Beleuchtungseinrichtung (5, 5.1, 5.2), die zumindest eine Objektivlinse (4, 4.1, 4.2) und der TOF-Sensor (2) derart zueinander und zu den Sichtfeldern (7.1, 7.2) und den darin liegenden Objekten (8.1, 8.2) angeordnet sind, dass Abbildungen (A, B, C, D) der Objekte (8.1, 8.2) zeitlich nacheinander auf dem einen TOF-Sensor (2) abbildbar sind, **dadurch gekennzeichnet, dass** zwei Beleuchtungseinrichtungen (5.1, 5.2) vorgesehen sind, wobei mittels jeder Beleuchtungseinrichtung (5.1, 5.2) jeweils ein Sichtfeld (7.1, 7.2) beleuchtbar ist, wobei zwischen den Objekten (8.1, 8.2) und dem TOF-Sensor (2) eine gemeinsame Objektivlinse (4) und zwischen den Objekten (8.1, 8.2) und der Objektivlinse (4) ein steuerbarer Spiegel (9) angeordnet ist, wobei der Spiegel (9) derart steuerbar ist, dass der Objektivlinse (4) mittels diesem entweder ein Strahlengang eines ersten Sichtfeldes (7.1) oder ein Strahlengang eines zweiten Sichtfeldes (7.2) zuführbar ist und Abbildungen (B, C) der Objekte (8.1, 8.2) in einem gemeinsamen Bereich auf dem TOF-Sensor (2) abbildbar sind.

3. Kameraanordnung (1) Anspruch 2,
**dadurch gekennzeichnet, dass** die zwei Beleuchtungseinrichtungen (5.1, 5.2) mit einer Steuereinrichtung gekoppelt sind, wobei die Beleuchtungseinrichtungen (5.1, 5.2) mittels der Steuereinrichtung unabhängig voneinander zu verschiedenen Zeitpunkten (t₁, t₂) aktivierbar sind.

4. Kameraanordnung (1) Anspruch 3,
**dadurch gekennzeichnet, dass** eine erste Beleuchtungseinrichtung (5.1) zu einem ersten Zeitpunkt (t₁) aktivierbar ist, wenn mittels des Spiegels (9) der Strahlengang des ersten Sichtfeldes (7.1) auf dem TOF-Sensor (2) abgebildet ist und dass eine zweite Beleuchtungseinrichtung (5.2) zu einem zweiten Zeitpunkt (t₂) dann aktivierbar ist, wenn mittels des Spiegels (9) der Strahlengang des zweiten Sichtfeldes (7.2) auf dem TOF-Sensor (2) abgebildet ist.

5. Kameraanordnung (1) nach einem der Ansprüche 2 bis 4,
**dadurch gekennzeichnet, dass** der Spiegel (9) ein digitaler Spiegel, insbesondere ein Mikrospiegel, ist.

6. Verwendung einer Kameraanordnung (1) nach einem der vorhergehenden Ansprüche zur Distanzmessung, wobei aus einer Laufzeit eines mittels der zumindest einen Beleuchtungseinrichtung (5, 5.1, 5.2) zu den Sichtfeldern (7.1, 7.2) ausgesandten Lichts eine Distanz zwischen der Kameraanordnung (1) zu dem zumindest einen in dem jeweiligen Sichtfeld (7.1, 7.2) liegenden Objekt (8.1, 8.2) ermittelt wird.

7. Verwendung nach Anspruch 6,
**dadurch gekennzeichnet, dass** innerhalb eines Fahrzeugs ein Kopf eines Fahrers und/oder ein Kopf eines Beifahrers, Gesten, Mimiken, Augenpositionen, Blickrichtungen, Sitzpositionen, Kopfpositionen und/oder anthropometrische Merkmale des Fahrers und/oder Beifahrers überwacht werden bzw. wird.

## Claims

1. A camera arrangement (1),
- comprising at least one illumination device (5, 5.1, 5.2) in order to illuminate several fields of vision (7.1, 7.2), wherein there is at least one respective object (8.1, 8.2) to be detected in the fields of vision (7.1, 7.2),
- comprising at least one objective lens (4, 4.1, 4.2) in order to focus an optical path which comprises at least one of the several fields of vision (7.1, 7.2),
and
- comprising a TOF sensor (2),
- wherein the at least one illumination device (5, 5.1, 5.2), the at least one objective lens (4, 4.1, 4.2) and the TOF sensor (2) are arranged with respect to each other and to the fields of vision (7.1, 7.2) and the objects (8.1, 8.2) contained therein such that images (A, B, C, D) of the objects (8.1, 8.2) can be simultaneously imaged onto the one TOF sensor (2),
**characterized in that** an illumination device (5) is provided, wherein the fields of vision (7.1, 7.2) can be illuminated by means of the illumination device (5), wherein a common objective lens (4.1) is arranged between the objects (8.1, 8.2) and the TOF sensor (2), wherein the objective lens (4.1) focusses an optical path which comprises at least two fields of vision (7.1, 7.2), and wherein images (D) of the objects (8.1, 8.2) contained in the fields of vision (7.1, 7.2) can be separately imaged in different areas (2.1, 2.2) of the TOF sensor (2).

2. A camera arrangement (1),
- comprising at least one illumination device (5, 5.1, 5.2) in order to illuminate several fields of vision (7.1, 7.2), wherein there is at least one respective object (8.1, 8.2) to be detected in the fields of vision (7.1, 7.2),
- comprising at least one objective lens (4, 4.1, 4.2) in order to focus several optical paths which respectively comprise at least one of the several fields of vision (7.1, 7.2), and
- comprising a TOF sensor (2),
- wherein the at least one illumination device (5, 5.1, 5.2), the at least one objective lens (4, 4.1, 4.2) and the TOF sensor (2) are arranged with respect to each other and to the fields of vision (7.1, 7.2) and the objects (8.1, 8.2) contained therein such that images (A, B, C, D) of the objects (8.1, 8.2) can be imaged onto the one TOF sensor (2) in chronological succession,
**characterized in that** two illumination devices (5.1, 5.2) are provided, wherein one respective field of vision (7.1, 7.2) can be illuminated by means of each illumination device (5.1, 5.2), wherein a common objective lens (4) is arranged between the objects (8.1, 8.2) and the TOF sensor (2) and a controllable mirror (9) is arranged between the objects (8.1, 8.2) and the objective lens (4), wherein the mirror (9) can be controlled such that either an optical path of a first field of vision (7.1) or an optical path of a second field of vision (7.2) can be supplied to the objective lens (4) by means of the mirror and images (B, C) of the objects (8.1, 8.2) can be imaged in a common area of the TOF sensor (2).

3. The camera arrangement (1) according to claim 2, **characterized in that** the two illumination devices (5.1, 5.2) are coupled with a control device, wherein the illumination devices (5.1, 5.2) can be activated by means of the control device independently of each other at different points in time (t₁, t₂).

4. The camera arrangement (1) according to claim 3, **characterized in that** a first illumination device (5.1) can be activated at a first point in time (t₁), when the optical path of the first field of vision (7.1) is imaged onto the TOF sensor (2) by means of the mirror (9), and that a second illumination device (5.2) can be activated at a second point in time (t₂), when the optical path of the second field of vision (7.2) is imaged onto the TOF sensor (2) by means of the mirror (9).

5. The camera arrangement (1) according to any one of claims 2 to 4,
**characterized in that** the mirror (9) is a digital mirror, in particular a micro mirror.

6. Use of a camera arrangement (1) according to any one of the preceding claims for distance measurement, wherein a distance between the camera arrangement (1) to the at least one object (8.1, 8.2) contained in the respective field of vision (7.1, 7.2) is determined on the basis of a propagation time of a light emitted to the fields of vision (7.1, 7.2) by means of the at least one illumination device (5, 5.1, 5.2).

7. The use according to claim 6,
**characterized in that** a head of a driver and/or a head of a passenger, gestures, facial expressions, eye positions, viewing directions, sitting positions, head positions and/or anthropometric features of the driver and/or passenger is or are monitored within a vehicle.

## Revendications

1. Système de caméra (1),
- comportant au moins un dispositif d'éclairage (5, 5.1, 5.2) pour l'éclairage de plusieurs champs de vision (7.1, 7.2), dans lequel au moins un objet (8.1, 8.2) à détecter est situé dans chacun des champs de vision (7.1, 7.2),
- comportant au moins une lentille d'objectif (4, 4.1, 4.2) pour la concentration d'une trajectoire de rayons qui comporte au moins un des plusieurs champs de vision (7.1, 7.2),
et
- comportant un capteur TOF (2),
- dans lequel l'au moins un dispositif d'éclairage (5, 5.1, 5.2), l'au moins une lentille d'objectif (4, 4.1, 4.2) et le capteur TOF (2) sont disposés les uns par rapport aux autres et par rapport aux champs de vision (7.1, 7.2) et aux objets (8.1, 8.2) situés dans ceux-ci de manière telle que des représentations (A, B, C, D) des objets (8.1, 8.2) peuvent être représentées simultanément sur le capteur TOF (2),
**caractérisé en ce qu'**un dispositif d'éclairage (5) est prévu, dans lequel les champs de vision (7.1, 7.2) peuvent être éclairés au moyen du dispositif d'éclairage (5), dans lequel entre les objets (8.1, 8.2) et le capteur TOF (2) est disposée une lentille d'objectif commune (4.1), dans lequel la lentille d'objectif (4.1) concentre une trajectoire de rayons qui comporte au moins deux champs de vision (7.1, 7.2), et dans lequel des représentations (D) des objets (8.1, 8.2) situés dans les champs de vision (7.1, 7.2) peuvent être représentées séparément dans différentes zones (2.1, 2.2) sur le capteur TOF (2).

2. Système de caméra (1),
- comportant au moins un dispositif d'éclairage (5, 5.1, 5.2) pour l'éclairage de plusieurs champs de vision (7.1, 7.2), dans lequel au moins un objet (8.1, 8.2) à détecter est situé dans chacun des champs de vision (7.1, 7.2),
- comportant au moins une lentille d'objectif (4, 4.1, 4.2) pour la concentration de plusieurs trajectoires de rayons qui comportent chacune au moins un des plusieurs champs de vision (7.1, 7.2) et
- comportant un capteur TOF (2),
- dans lequel l'au moins un dispositif d'éclairage (5, 5.1, 5.2), l'au moins une lentille d'objectif (4, 4.1, 4.2) et le capteur TOF (2) sont disposés les uns par rapport aux autres et par rapport aux champs de vision (7.1, 7.2) et aux objets (8.1, 8.2) situés dans ceux-ci de manière telle que des représentations (A, B, C, D) des objets (8.1, 8.2) peuvent être représentées les unes après les autres dans le temps sur le capteur TOF (2),
**caractérisé en ce que** deux dispositifs d'éclairage (5.1, 5.2) sont prévus, dans lequel un champ de vision (7.1, 7.2) peut être éclairé respectivement au moyen de chaque dispositif d'éclairage (5.1, 5.2), dans lequel entre les objets (8.1, 8.2) et le capteur TOF (2) est disposée une lentille d'objectif commune (4) et entre les objets (8.1, 8.2) et la lentille d'objectif (4) est disposé un miroir commandable (9), dans lequel le miroir (9) est commandable de manière que, au moyen de celui-ci, soit une trajectoire de rayons d'un premier champ de vision (7.1), soit une trajectoire de rayons d'un second champ de vision (7.2) peut être amenée à la lentille d'objectif (4) et des représentations (B, C) des objets (8.1, 8.2) peuvent être représentées dans une zone commune sur le capteur TOF (2).

3. Système de caméra (1) selon la revendication 2, **caractérisé en ce que** les deux dispositifs d'éclairage (5.1, 5.2) sont couplés avec un dispositif de commande, dans lequel les dispositifs d'éclairage (5.1, 5.2) peuvent être activés au moyen du dispositif de commande indépendamment l'un de l'autre à des instants différents (t₁, t₂).

4. Système de caméra (1) selon la revendication 3, **caractérisé en ce qu'**un premier dispositif d'éclairage (5.1) peut être activé à un premier instant (t₁) lorsque, au moyen du miroir (9), la trajectoire de rayons du premier champ de vision (7.1) est représentée sur le capteur TOF (2) et **en ce qu'**un second dispositif d'éclairage (5.2) peut être ensuite activé à un second instant (t₂) lorsque, au moyen du miroir (9), la trajectoire de rayons du second champ de vision (7.2) est représentée sur le capteur TOF (2).

5. Système de caméra (1) selon l'une quelconque des revendications 2 à 4, **caractérisé en ce que** le miroir (9) est un miroir numérique, en particulier un micromiroir.

6. Utilisation d'un système de caméra (1) selon l'une quelconque des revendications précédentes pour la télémétrie, dans laquelle, à partir d'un temps de propagation d'une lumière émise au moyen de l'au moins un dispositif d'éclairage (5, 5.1, 5.2) vers les champs de vision (7.1, 7.2), est déterminée une distance entre le système de caméra (1) et l'au moins un objet (8.1, 8.2) situé dans le champ de vision respectif (7.1, 7.2).

7. Utilisation selon la revendication 6,
**caractérisée en ce que**, à l'intérieur d'un véhicule, une tête d'un conducteur et/ou une tête d'un passager, des gestes, des mimiques, des positions des yeux, des directions de regard, des positions assises, des positions de tête et/ou des caractéristiques anthropométriques du conducteur et/ou du passager est ou sont surveillés.
